# EUROPEAN PATENT APPLICATION

(11) **EP 3 695 696 A1**
(43) Date of publication of application: **19.08.2020**
(21) Application number: 19000079.4
(22) Date of filing: 12.02.2019
(51) Int. Cl.: A01C 1/04, A01C 1/06, A01G 9/029

(54) **SEED MATERIAL PELLETS**

(71) Applicant: Instant Seed GmbH, 15831 Mahlow (DE)
(72) Inventor: Krecisz, Adam, 13437 Berlin (DE); Krecisz, Thomas, 13407 Berlin (DE); Weiss, Volker, 15831 Mahlow (DE)
(74) Representative: Jungblut & Seuss

(57) **Abstract**

The invention relates to a seed material pellet comprising at least one seed (1), wherein the pellet consists of the seed (1) embedded within a matrix (2), wherein the matrix (2) comprises an organic or inorganic binder or a mixture of such binders and organic or inorganic fibers (4), treated or untreated, and wherein at least 1%, preferably at least 20%, in particular at least 50% of the fibers (4) have a fiber length of at least about 0,25 mm.

## Description

### Field of the invention.

The invention relates to a seed material pellet comprising at least one seed, wherein the pellet consists of the seed embedded within a matrix, and wherein the matrix comprises an organic or inorganic binder and organic or inorganic fibers, treated or untreated.

Prior art and background of the invention.

Seed material pellets of the kind described above are known from the documents DE 10 2014 005 451 A1 and DE 10 2005 040 873 A1. The insofar known pellets comprise one single seed or several seeds in each pellet, wherein the seed is coated with a matrix. In case of the document DE 10 2005 040 873 A1 the matrix consists of a plurality of layers of different composition. The production process of these pellets is complicated and related with high costs due to the multilayer structure of the matrix surrounding the single seed. Furthermore, the total weight of a pellet is rather low and only little above the weight of a single seed, resulting in that the pellets are easily washed away from the area where the pellets have been brought out, typically washing a higher number of pellets to a few parts of the area being a bit lower than the rest of the area. Consequently the area shows growth in a very inhomogeneous manner. This is in particular undesirable when planting plants, e.g. a lawn, or supplementing an existing acreage, e.g. lawn, in places of need of additional plants, e.g. grass plants.

The document DE 43 09 679 A1 discloses seed material pellets each comprising several seeds, wherein one seed is embedded in a core matrix and further seeds are embedded in a mantle matrix different from the core matrix, wherein the mantle matrix in addition comprises more than one layer. These seed material pellets are also difficult to make and consequently have high production costs.

The document DE 849 195 discloses a machine for making seed material pellets, wherein the resulting pellets are of spherical form. This particular machine is rather unsuitable for elongated seeds, since there is considerable risk to damage the seeds during the manufacturing process.

The document US 3,905,152 describes a seed pellet, wherein the matrix comprises hydrophobic particulate compounds.

The document US 2,579,735 describes seeds embedded in a core matrix and a mantle matrix, wherein fibers are included into the mantle matrix.

Technical object of the invention.

It is the technical object of the invention to provide seed material pellets, which are easily manufactured, show low to absent damage in the embedded seeds, even if put into the soil, and provide uniform sowing results, even after watering of the area of sowing.

Basics of the invention and preferred embodiments.

In order to achieve this technical object, the invention teaches a seed material pellet comprising at least one seed, wherein the pellet consists of the seed embedded within a matrix, wherein the matrix comprises an organic or inorganic binder or a mixture of such binders and preferably non-hydrophobic organic or inorganic fibers, treated or untreated, and wherein at least 1%, preferably at least 20%, in particular at least 50%, even at least 90%, of the fibers have a fiber length of at least about 0,25 mm.

The term "embedded" means that a seed is completely surrounded and in direct contact with the matrix material.

According to the invention the matrix into which the seeds are embedded is essentially uniform in constitution (nevertheless allowing other particles than seeds being additionally embedded into the nevertheless uniform actual matrix material). In particular the seeds are not coated with materials constituting a core/mantle structure on the basis of different binders in the matrix.

Hydrophobic molecules typically are non-polar. A material not being hydrophobic typically shows a contact angle upon deposition of a water droplet onto a surface of the material of less than 90°, mostly less than 70°, especially less than 30° or 20°.

Seed material pellets according to the invention are produced with simple manufacturing processes and thus cost effective in the production, due to the essentially uniform constitution (same binder and/or fibers within the whole matrix, which coats the seed) of the matrix. Furthermore, seed material pellets of the invention have a total weight sufficient to ensure that subsequent watering after sowing will not wash away considerable amounts of the pellets. In fact, the seed material pellets of the invention may be engineered to any desired specific total weight without significantly altering the actual manufacturing process or the principle constitution of the pellets. In this context it is noted that these advantages in the production processes are obtained independently of the number of seeds incorporated into the seed pellet, the form of the seeds or the weight of the seeds. A particular advantage is that the pellets of the invention are mechanically resistant against mechanical sowing machines, i.e. they do not burst and the seed remains biologically intact. Furthermore, the pellets of the invention nevertheless provide that a very mayor part of the pellets being sowed out germinate successfully.

This in the end ensures that a sowing area shows better uniformity in the distribution of plants growing from the seeds.

In the following preferred but non-limiting embodiments are described in detail.

The pellet may comprises one single seed, or 2 to 15 seeds, preferably 2 to 5 seeds. The single seed variant is e.g. preferable for soya or tomato seeds. The multiple seed variant is useful for less expensive seeds and plants, which shall grow in a very dense arrangement, like grass.

The binder or binder mixture is preferably of essentially homogeneous constitution, i.e. no core/mantle structure of the binder constitution is established. The phrase "essentially homogeneous" means that the concentrations of all components or molecules of the binder vary less than by 5% at any particular location within the binder, compared with the total concentrations of the components/molecules of the binder.

In one embodiment the fibers are distributed essentially homogeneously within the matrix. The phrase "essentially homogeneously" means that the number of fibers in a volume unit of the matrix is essentially constant in the whole matrix, wherein this number may vary from one volume unit to the next volume unit by less than 20%. A volume unit shall have a volume, which provides that at least 10 complete fibers are within this volume as a whole.

However, the binder and/or the fibers may also be distributed non-homogeneously. It may e.g. be of advantage to locate fibers of medium length in der vicinity of the seed, fibers of shorter than medium length near the surface of the pellet and fibers of longer than medium length in between. Placing fibers being shorter than medium length near the surface of the pellet provides for a smooth surface of the pellet. Furthermore, the concentration of fibers in the matrix may vary depending from the distance from the seed, thus, in a complementary way, also varying the concentration of the binder depending on the distance from the seed.

Preferably the fibers in the matrix are oriented essentially parallel to the surface of the pellet. The phrase "essentially parallel" means that an angle of any part of a fiber is arranged at an orientation angle in the range of 60° to 120° to a straight radial line running through the center of gravity of the pellet and the longitudinal middle of the fiber.

The binder is preferably selected from the group consisting of water soluble organic polymers, in particular polyvinyl alcohols (PVAL), polysaccharides, dextrin, starch, pectin, cellulose, hemicelluloses, cellulose acetate, ethyl cellulose, methylcellulose, oxyethyl-cellulose, oxypropylcellulose, carboxymethyl-cellulose, gelatin, lignin, plant gums, alginate gels, chitin, proteins, inorganic binders, planting earth, clay, and bentonite, preferably is a thixotropic organic or inorganic binder. Most preferably clay is used as a binder. Thixotropic binders have the advantage that a risk of damaging a seed when coating the seed with the matrix is reduced. Furthermore, the coating process becomes more uniform and, thus, leads to low variations of the thickness of the matrix around the seed. The viscosity of a thixotropic binder is lower under mechanical agitation than the viscosity of the binder without agitation.

The fibers are preferably selected from the group consisting of natural treated or untreated organic fibers, wood fibers, coconut fibers, peat fibers, flax fibers, hemp fibers and cotton fibers, viscose fibers, hydrate cellulose fibers, fibers made of synthetic polymers. Most preferably are viscose fibers or hydrate cellulose fibers. The latter differ substantially from e.g. cellulose material in that the individual fibers are not tangles with another, thus allowing a control of the fiber orientation. Inorganic fibers may as well be used, e.g. rock wool fibers or glass wool fibers.

At least 1%, preferably at least 20%, in particular at least 50% or at least 90% of the fibers may have a length in the range from 0,25 mm to 10 mm, in particular from 0,5 mm to 8 mm, preferably from 0,5 mm to 2 mm or from 3 mm to 8 mm. The first preferred range applies in cases of small seeds, like tomato. The latter preferred range applies in cases of larger seeds, like grass and soya. However, the fiber length may instead also be adapted to the variety of the seed as easily tested by sawing and germination experiments with a specific variety and different fiber lengths. The fibers preferably have a diameter in the range from 3 *µ*m to 60 *µ*m, in particular from 6 *µ*m to 30 *µ*m. The amount of the fibers in the matrix is preferably 0,5 to 50 weight-% or to 20 weight-% of the total weight of the matrix, in particular 1 to 20 weight-% of the total weight of the matrix.

A typical pellet may have a total weight in the range of 10 mg to 650 mg, preferably 50 mg to 350 mg. The maximum dimension of the pellet typically may be in the range of 1 mm to 20 mm, preferably 1,5 mm to 8 mm. The phrase "maximum extension" means the maximum distance of two points on the surface of a pellet.

A particulate compound different from the seeds and fibers may additionally be embedded in the matrix, the particulate compound comprising compounds selected from the group consisting of herbicides, insecticides, fungicides, soil chemistry humins, plant hormones, in particular for the stimulation of gibberellins, amino acids, carbohydrates, in particular glucose, ribose, galactose, unsaturated C11 to C28 fatty acids, ionic compounds comprising K, Mg, Mn, Fe and/or Cu ions, and fertilizers. In a preferred embodiment the particulate compound is not distributed homogeneously within the matrix, but essentially absent at the surface of the seed (interface seed/matrix). This is in particular of advantage in case of compounds, which are adverse for germinating of the seed, if in direct contact to the surface of the seed.

The binder preferably is porous, in particular with a porosity of 0,001 to 0,900, preferably 0,050 to 0,300, calculated as the total volume of cavities in the matrix divided through the total volume of the matrix, including the cavities.

The seed material pellet according to the invention is obtainable in that the seed is embedded in the matrix and the matrix comprising the seed is formed to produce the pellet.

The invention may be used essentially for all kinds of seeds. The seed may e.g. be a seed from plants selected from the group consisting of poaceae, cyperaceae, and juncaceae, in particular perennial grasses, lawn grasses, wheat, rye, oat, maize, millet, rice, teff, buckwheat, and barley, leguminosae, fabaceae, solanceae, soya, tomato, and pea.

Seed material pellets according to the invention may be used for sowing within a sowing area, wherein seed material pellets are distributed onto the soil of a sowing area, the seed material pellets being optionally pressed or put into the soil, and the sowing area is watered.

Seed material pellets may be made using conventional seed coating technologies of the art.

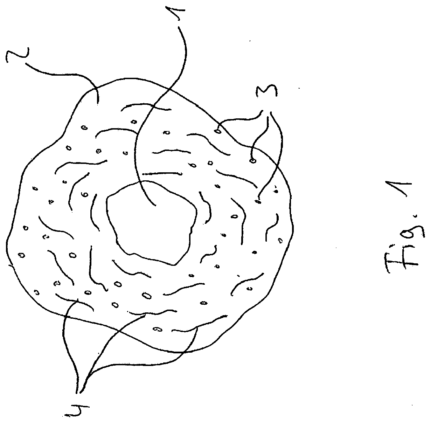

In the following the invention is explained in more detail with reference to non-limiting Figure 1 and Examples.

Figure 1 shows a schematic cross section through a seed material pellet of the invention. The seed material pellet of this embodiment comprises one seed 1, which is embedded within a matrix (2). The matrix (2) comprises an organic binder and non-hydrophobic organic fibers (4). At least 1%, preferably at least 20%, in particular at least 50%, maybe even at least 90% of the fibers (4) have a fiber length of at least about 0,25 mm. The binder is of essentially homogeneous constitution. The fibers (4) are distributed essentially homogeneously within the matrix (2), and are oriented essentially parallel to the surface of the pellet. The particulate compound (3) may not be distributed homogeneously within the matrix (2), but essentially absent at the surface of the seed (1). Specific examples with respect to the components are provided in the following.

### Example 1: First seed material pellet

A first seed material pellet is composed of one single tomato or soya seed 1, which is embedded in a matrix 2 consisting of clay. Viscose fibers 4 having an average length of about 0,3 mm are embedded into the matrix material. About 30 *µ*g of grains 3 containing Pyroxsulam 68 and Florasulam 23 as herbicides, and Triadimenol as fungicides are comprised in the matrix additionally. The composition of the matrix is provided in Table 1.

**Table 1**

| | |
|---|---|
| Pyroxsulam 68 | 1 *µ*g |
| Florasulam 23 | 1 *µ*g |
| Triadimenol | 2,5 *µ*g |
| Viscose fibers | 5 - 10 mg |
| Clay | 40 mg |

### Example 2: Second seed material pellet

A second seed material pellet is composed of 3 wheat seeds 1, which are embedded in a matrix 2 consisting of clay and comprising viscose fibers 4 with an average length of about 2,0 mm. About 30 *µ*g of further particles 3 are embedded into the matrix material being grains containing Pyroxsulam 68 and Florasulam 23 as herbicides, and Triadimenol as fungicides. The composition of the matrix is provided in Table 2.

**Table 2**

| | |
|---|---|
| Pyroxsulam 68 | 1 *µ*g |
| Florasulam 23 | 1 *µ*g |
| Triadimenol | 2,5 *µ*g |
| Viscose fibers | 5 -10 mg |
| Clay | 70 mg |

### Example 3: Third seed material pellet

A third seed material pellet is composed of 5 rice seeds 1, which are embedded in a matrix 2 consisting of clay. Fibers 4 with an average length of about 1,5 mm and made of a biodegradable synthetic organic polymer, e.g. modified polyamide 6.6 or PLA, are incorporated into the matrix. About 30 *µ*g of grains 3 containing benzsulfuronmethyl as herbicide and dimepiperate as seed safener are additionally comprised in the matrix. The composition is provided in Table 3.

**Table 3**

| | |
|---|---|
| Benzsulfuronmethyl | 1 *µ*g |
| Dimepiperate | 1 *µ*g |
| Synthetic fibers | 5 - 10 mg |
| Clay | 90 mg |

### Example 4: Fourth seed material pellet

A fourth seed material pellet is composed of 2 tomato seeds 1, which are embedded in a matrix 2 consisting of planting earth mixed with a polyvinyl alcohol (PVAL). The synthetic fibers 4 of Example 3 are embedded into the matrix material being coconut fibers. The composition is provided in Table 4.

**Table 4**

| | |
|---|---|
| Seeds | 7 mg |
| Synthetic fibers | 5 - 10 mg |
| PVAL + earth | 190 mg |

## Claims

1. Seed material pellet comprising at least one seed,
wherein the pellet consists of the seed (1) embedded within a matrix (2),
wherein the matrix (2) comprises an organic or inorganic binder or a mixture of such binders and preferably non-hydrophobic organic or inorganic fibers (4), treated or untreated, and
wherein at least 1%, preferably at least 20%, in particular at least 50% of the fibers (4) have a fiber length of at least about 0,25 mm.

2. Seed material pellet according to claim 1,
wherein the pellet comprises one single seed (1), or wherein the pellet comprises 2 to 15 seeds (1), preferably 2 to 5 seeds (1).

3. Seed material pellet according to one of the claims 1 or 2, wherein the binder or binder mixture is of essentially homogeneous constitution.

4. Seed material pellet according to one of the claims 1 to 3, wherein the fibers (4) are distributed essentially homogeneously within the matrix (2), and/or wherein the fibers (4) in the matrix (2) are oriented essentially parallel to the surface of the pellet.

5. Seed material pellet according to one of the claims 1 to 4, wherein the binder is selected from the group consisting of water soluble organic polymers, in particular polyvinyl alcohols (PVAL), polysaccharides, dextrin, starch, pectin, cellulose, hemicelluloses, cellulose acetate, ethyl cellulose, methylcellulose, oxyethyl-cellulose, oxypropylcellulose, carboxymethyl-cellulose, gelatin, lignin, plant gums, alginate gels, chitin, proteins, inorganic binders, planting earth, and clay, preferably is a thixotropic organic or inorganic binder, most preferably is clay.

6. Seed material pellet according to one of the claims 1 to 5, wherein the fibers (4) are selected from the group consisting of natural treated or untreated organic fibers, wood fibers, coconut fibers, peat fibers, flax fibers, hemp fibers and cotton fibers, viscose fibers, hydrate cellulose fibers, fibers made of synthetic polymers, most preferably are viscose fibers or hydrate cellulose fibers, or from inorganic fibers, like rock wool fibers or glass wool fibers.

7. Seed material pellet according to one of the claims 1 to 6, wherein at least 1%, preferably at least 5%, in particular at least 10% or at least 50% of the fibers (4) have a length in the range from 0,25 mm to 10 mm, in particular from 0,5 mm to 8 mm, preferably from 0,5 mm to 2 mm or from 3mm to 8 mm, and/or wherein the fibers (4) have a diameter in the range from 3 *µ*m to 60 *µ*m, in particular from 6 *µ*m to 30 *µ*m, and/or wherein the amount of the fibers (4) in the matrix (2) is 0,5 to 50 weight-% or to 20 weight-% of the total weight of the matrix (2), in particular 1 to 20 weight-%.

8. Seed material pellet according to one of the claims 1 to 7, wherein the pellet has a total weight in the range of 10 mg to 650 mg, preferably 50 mg to 350 mg.

9. Seed material pellet according to one of the claims 1 to 8, wherein the maximum dimension of the pellet is in the range of 1 mm to 20 mm, preferably 1,5 mm to 8 mm.

10. Seed material pellet according to one of the claims 1 to 9, wherein a particulate compound (3) different from the seeds (1) and fibers (4) is additionally embedded in the matrix (2), the particulate compound (3) comprising compounds selected from the group consisting of herbicides, insecticides, fungicides, soil chemistry humins, plant hormones, in particular for the stimulation of gibberellins, amino acids, carbohydrates, in particular glucose, ribose, galactose, unsaturated C11 to C28 fatty acids, ionic compounds comprising K, Mg, Mn, Fe and/or Cu ions, and fertilizers.

11. Seed material pellet according to claim 10, wherein the particulate compound (3) is not distributed homogeneously within the matrix (2), but essentially absent immediately at the surface of the seed (1).

12. Seed material pellet according to one of the claims 1 to 10, wherein the binder is porous, in particular with a porosity of 0,001 to 0,900, preferably 0,050 to 0,300, calculated as the total volume of cavities in the matrix (2) divided through the total volume of the matrix (2), including the cavities.

13. Seed material pellet according to one of the claims 1 to 12, obtainable in that the seed (1) is embedded in the matrix (2) and the matrix (2) comprising the seed (1) is formed to produce the pellet.

14. Seed material pellet according to one of the claims 1 to 13, wherein the seed (1) is a seed from plants selected from the group consisting of Poaceae, Cyperaceae, and Juncaceae, in particular perennial grasses, lawn grasses, wheat, rye, oat, maize, millet, rice, teff, buckwheat, and barley, leguminosae, fabaceae, solanceae, soya, tomato, and pea.

15. Use of seed material pellets according to one of the claims 1 to 13 for sowing within a sowing area, wherein seed material pellets are distributed onto the soil of a sowing area, the seed material pellets being optionally pressed and/ or put into the soil, and the sowing area is watered.
